Europäisches Patentamt

European Patent Office

Office européen des brevets

(11) Numéro de publication : **0 115 448**
**B1**

# (12) FASCICULE DE BREVET EUROPÉEN

(45) Date de publication du fascicule du brevet :
30.07.86

(51) Int. Cl.⁴ : **B 60 R   1/06**

(21) Numéro de dépôt : **84400008.3**

(22) Date de dépôt : **04.01.84**

(54) **Dispositif de fixation et de verrouillage d'un support de miroir sur un organe réglable d'un rétroviseur de véhicule.**

(30) Priorité : **28.01.83 FR 8301361**

(43) Date de publication de la demande :
**08.08.84 Bulletin 84/32**

(45) Mention de la délivrance du brevet :
**30.07.86 Bulletin 86/31**

(84) Etats contractants désignés :
**DE GB IT SE**

(56) Documents cités :
**DE-A- 2 748 823**
**DE-B- 2 907 433**

(73) Titulaire : **Manzoni-Bouchot Société anonyme dite:**
**Zone Industrielle "Le Plan d'Acier" Boîte Postale No**
**9**
**F-39200 Saint-Claude (FR)**

(72) Inventeur : **Manzoni, Stéphane**
**1, rue Pasteur**
**F-39200 Saint Claude (FR)**

(74) Mandataire : **Descourtieux, Philippe et al**
**CABINET BEAU de LOMENIE 55 rue d'Amsterdam**
**F-75008 Paris (FR)**

EP 0 115 448 B1

## Description

La présente invention a pour objet un dispositif de fixation et de verrouillage d'un support de miroir sur un organe réglable d'un rétroviseur de véhicule.

Lors du bris d'un miroir de rétroviseur, il est souvent nécessaire de remplacer l'ensemble du rétroviseur, ce qui est particulièrement onéreux lorsqu'il s'agit d'un rétroviseur à commande électrique.

Il est évidemment préférable et moins onéreux pour l'usager d'avoir la possibilité de remplacer seulement le miroir.

On connaît un dispositif de support porte-miroir monté de façon amovible sur une platine orientable actionnée par un mécanisme auquel elle est reliée, les moyens de fixation et de verrouillage étant constitués par une bague de serrage rotative et un système à baïonnette.

Toutefois, ce dispositif ne donne pas entière satisfaction et la présente invention a pour objet un dispositif plus simple et moins onéreux.

Conformément à la présente invention, le support de miroir présente une ouverture dans laquelle la platine est encastrée et y est maintenue par au moins l'un de ses bords, cependant ledit support est verrouillé sur l'un des autres bords de ladite platine au moyen d'un organe de verrouillage monté coulissant axialement sur le support de miroir et susceptible de venir en appui en position de verrouillage contre au moins un bord de la platine.

L'invention sera mieux comprise à la lecture de la description qui va suivre de plusieurs modes de réalisation et en se référant aux dessins annexés, sur lesquels :

la figure 1 est une vue en élévation de la face arrière du support de miroir muni du dispositif de fixation et de verrouillage suivant l'invention ;

la figure 2 est une vue en coupe du support de miroir suivant la ligne II-II de la figure 1 ;

la figure 3 est une vue en coupe du dispositif suivant la ligne III-III de la figure 1 ;

la figure 4 est une vue en élévation et en coupe du dispositif suivant la ligne IV-IV de la figure 1 ;

la figure 5 est une vue en élévation de la face avant du support de miroir ;

la figure 6 est une vue en coupe du support de miroir et de la platine suivant la ligne VI-VI de la figure 5 ;

la figure 7 est une vue en élévation de la face arrière du dispositif de verrouillage en position inactive ;

la figure 8 est une vue en élévation de la face arrière d'un autre mode de réalisation du dispositif de fixation et de verrouillage en position effacée ;

la figure 9 est une même vue du dispositif qu'à la figure 8 en position de verrouillage ;

la figure 10 est une vue en coupe suivant la ligne X-X de la figure 9.

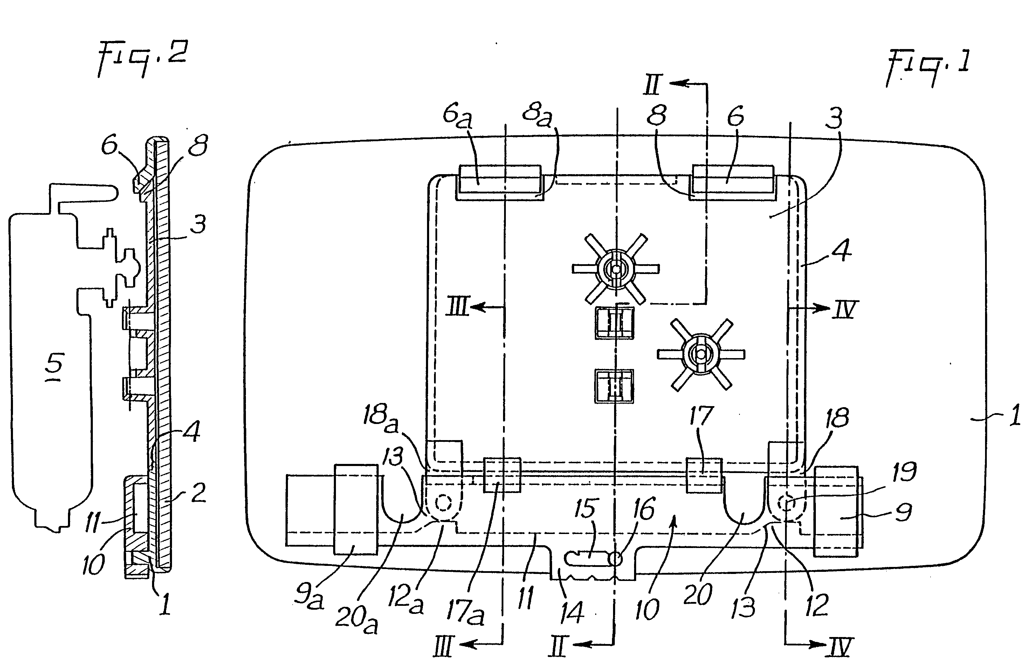

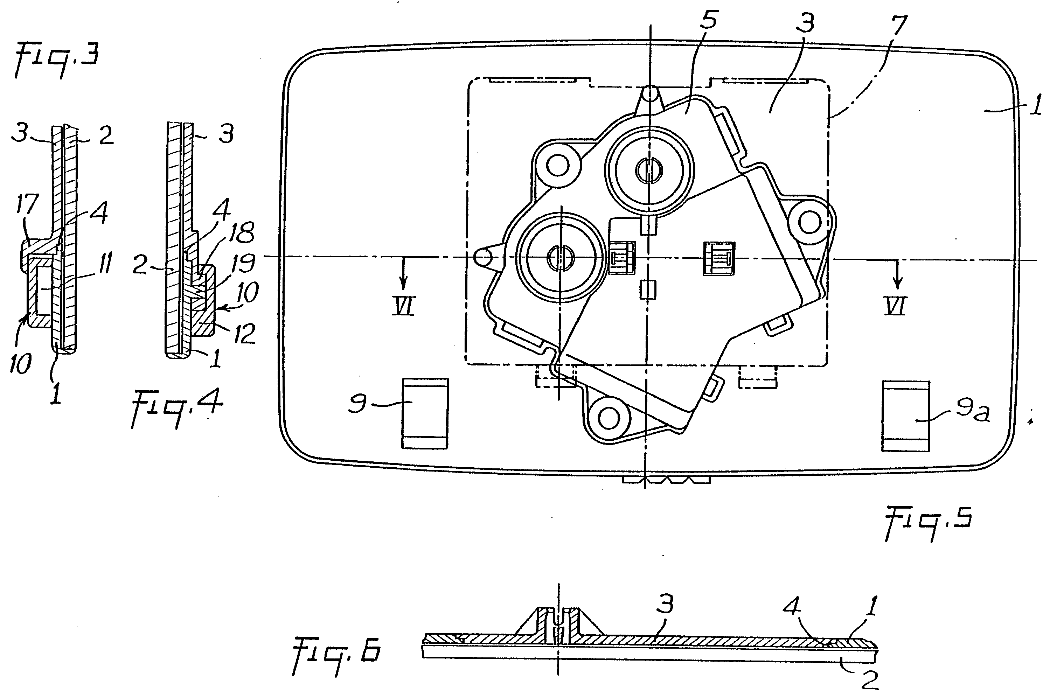

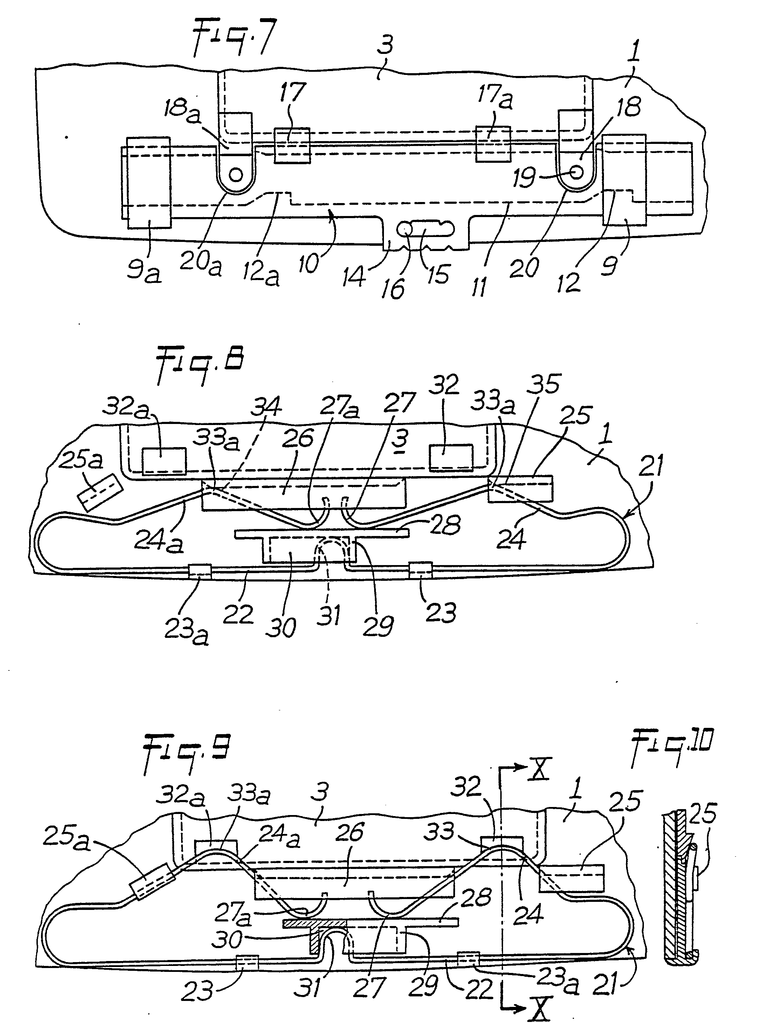

Aux figures 1 à 6, on a représenté la partie interne d'un rétroviseur qui est disposé dans un boîtier non représenté au dessin et qui est destiné à être monté à l'extérieur d'un véhicule, ladite partie interne comprenant un support de miroir réglable de l'intérieur du véhicule. La partie interne du rétroviseur comprend un support 1 sur lequel est monté un miroir 2 et qui présente une ouverture centrale 7 par laquelle il est encastré sur le pourtour d'une platine 3 par un assemblage à feuillure 4. La platine 3 qui est orientable suivant deux directions perpendiculaires horizontale et verticale est actionnée par un mécanisme 5 (figure 2) de type connu auquel elle est reliée de façon permanente.

Par contre, le support 1 de miroir est monté de façon amovible sur la platine 3 de manière à permettre le remplacement du miroir 2 lorsque celui-ci est brisé.

Dans ce but, le support 1 de miroir comporte, à proximité du bord supérieur de l'ouverture 7, deux crochets 6, 6a (figures 1 et 2) dans lesquels sont engagés des bossages 8, 8a prévus sur le bord supérieur de la platine 3.

A la partie inférieure et sur sa face arrière, le support 1 comporte deux organes de guidage annulaires 9, 9a dans lesquels est montée coulissante axialement une barrette 10 en matière plastique destinée à assurer le verrouillage du support 1 sur la platine 3 (figures 1 à 7), ladite barrette présentant une rainure axiale 11 dont l'ouverture est dirigée en regard de la face arrière du support 1. A l'intérieur de cette rainure 11 sont conformés deux bossages ou cames 12, 12a présentant des plans inclinés 13.

A sa partie inférieure, la barrette 10 présente un bossage 14 dans lequel il est prévu un trou oblong 15 qui reçoit un téton 16 pouvant occuper deux positions extrêmes de verrouillage et de déverrouillage, ledit bossage étant susceptible d'être commandé par un outil à travers un orifice prévu dans le boîtier.

De part et d'autre de son axe médian et du côté opposé aux bossages 8, 8a, la platine 3 comporte deux pattes extérieures 17, 17a qui sont en appui contre la face extérieure de la barrette 10 et, aux deux extrémités de la platine du côté opposé aux bossages 8, 8a, celle-ci comporte deux pattes intérieures 18, 18a qui sont disposées dans la rainure 11 et présentent un trou dans lequel est engagé un téton 19 solidaire du support 1.

Dans la barrette 10, il est prévu en dehors des cames ou bossages des ouvertures 20, 20a pour le passage des pattes 18, 18a en position de déverrouillage. La platine 3 étant encastrée dans l'ouverture centrale 7 du support 1 de miroir et les crochets 6, 6a étant engagés sur les bossages 8, 8a, la barrette 10 se trouve en position verrouillée à la figure 1.

Dans ce cas, les pattes 17, 17a sont en appui sur la face extérieure de la barrette 10 et les pattes 18, 18a engagées sur les tétons 19 sont en appui contre la face intérieure de la rainure 11 de la barrette, l'extrémité inférieure des pattes 18, 18a étant en appui contre les cames ou bossages 12, 12a qui maintiennent la liaison du support sur la platine suivant un axe perpendiculaire à celui de la barrette.

Pour démonter le support 1 et sa glace, il suffit de faire coulisser, au moyen du bossage 14, la barrette 10 vers la droite comme représenté à la figure 7, afin d'amener les ouvertures 20, 20a de la barrette en regard des pattes 18, 18a et de dégager lesdites pattes des cames 12, 12a. Lorsque le dispositif est déverrouillé, comme représenté à la figure 7, il est alors possible de séparer les pattes 18, 18a des tétons 19 et de dégager le support 1 de miroir de la platine 3.

Aux figures 8 et 9, on a représenté un autre mode de réalisation dans lequel la barrette 10 en matière plastique est remplacée par un élément en fil d'acier élastique 21 qui présente une partie rectiligne 22 et deux branches repliées symétriquement en direction de la partie rectiligne. La partie rectiligne 22 est montée coulissante axialement dans des organes de guidage 23, 23a solidaires du support 1 de miroir et lesdites branches présentent deux boucles 24, 24a déformables qui sont guidées, d'une part, dans des rainures prévues dans des organes de guidage 25, 25a d'extrémité et, d'autre part, dans une rainure d'un organe de guidage central 26, les extrémités recourbées 27, 27a des branches étant en appui contre une face 28 d'un bossage 29 solidaire du support 1 de miroir comme les organes de guidage 25, 25a et 26.

Dans le bossage 29, il est prévu un logement 30 dans lequel se déplace une boucle 31 prévue dans le milieu de la partie rectiligne 22, afin de permettre d'actionner l'organe de verrouillage à travers un orifice situé à la partie inférieure du boîtier.

A proximité du bord inférieur de la platine 3, il est prévu deux bossages 32, 32a présentant une face inclinée contre laquelle est en appui chaque sommet 33, 33a des boucles 24, 24a de l'organe en fil 21 lorsqu'il est en position de verrouillage (figures 9, 10). Dans ce cas, les extrémités recourbées 27, 27a sont en appui contre la surface 28 et les boucles 24, 24a sont engagées dans les rainures des organes de guidage 25, 25a et 26 où elles sont maintenues en appui contre la face arrière du support 1 et contre les bossages 32, 32a de la platine 3, assurant ainsi le verrouillage par coincement du support 1 de miroir. Si on déplace l'élément 21 en fil d'acier vers la droite au moyen de la boucle 31, les sommets 33, 33a des boucles 24, 24a abandonnent les bossages 32, 32a de la platine 3 et ils viennent s'engager contre les bords intérieurs 34, 35 des organes de guidage 26 et 25 après compression des boucles 24, 24a qui sont en position escamotée et permettent le dégagement du support 1 de la platine 3.

Il est également possible de prévoir sur la platine 3 des logements dans lesquels les sommets 33, 33a des boucles 24, 24a sont engagés en position de verrouillage.

**Revendications**

1. Dispositif de fixation et de verrouillage d'un support (1) de miroir (2) sur une platine (3) orientable actionnée par un mécanisme auquel elle est reliée et qui est disposé dans un boîtier de rétroviseur pour véhicule, caractérisé en ce que le support (1) de miroir (2) présente une ouverture (7) dans laquelle la platine (3) est encastrée et y est maintenue par au moins l'un de ses bords, cependant que ledit support (1) est verrouillé sur l'un des autres bords de ladite platine (3) au moyen d'un organe de verrouillage (10, 21).

2. Dispositif de fixation selon la revendication 1, caractérisé en ce que l'organe de verrouillage (10, 21) est monté coulissant axialement sur le support (1) de miroir (2) et est susceptible de venir en appui en position de verrouillage contre au moins un bord de la platine (3).

3. Dispositif selon la revendication 2, caractérisé en ce que le support (1) de miroir est encastré sur le pourtour de la platine (3) par un assemblage à feuillure (4) et ledit support présente sur l'un de ses bords au moins un crochet (6, 6a) dans lequel est engagé un bord de la platine (3) opposé au bord portant les organes de retenue (17, 17a, 18, 18a, 32, 32a) coopérant avec l'organe de verrouillage (10, 21) coulissant dans le support (1) de miroir.

4. Dispositif selon l'une quelconque des revendications 2 et 3, caractérisé en ce que l'organe de verrouillage est constitué d'une barrette (10) montée coulissante axialement dans au moins deux organes de guidage (9, 9a) solidaires du support (1) de miroir, ladite barrette (10) étant susceptible de venir en appui en position de verrouillage contre une première paire de pattes (18, 18a) solidaires de la platine (3), d'une part, par sa face intérieure et, d'autre part, par deux cames (12, 12a) agissant perpendiculairement à l'axe longitudinal de la barrette (10), ladite barrette (10) présentant deux ouvertures (20, 20a) situées en dehors des cames (12, 12a) pour le passage de la première paire de pattes (18, 18a) et le dégagement du support (1) de miroir, ladite platine (3) étant munie d'une deuxième paire de pattes (17, 17a) en appui contre la face extérieure de la barrette (10).

5. Dispositif selon la revendication 4, caractérisé en ce que les pattes (18, 18a) de la première paire comportent chacune un trou dans lequel est engagé un téton (19) solidaire du support (1) de miroir.

6. Dispositif selon la revendication 4, caractérisé en ce que la barrette (10) en matière plastique comporte un bossage (14) muni d'un trou oblong (15) dans lequel est engagé un téton (16) de positionnement de la barrette (10) solidaire du support (1) de miroir.

7. Dispositif selon la revendication 2, caractérisé en ce que l'organe de verrouillage est constitué d'un élément en fil d'acier (21) élastique présentant une partie rectiligne (22) et deux branches repliées symétriquement en direction de la partie rectiligne (22), ladite partie rectiligne (22) de l'organe de verrouillage étant montée coulissante axialement dans des organes de guidage (23, 23a) solidaires du support (1) de miroir et lesdites branches présentant deux boucles (24, 24a) déformables guidées à leurs extrémités dans des rainures (25, 25a, 26) ménagées sur la face arrière du support (1) de miroir et susceptibles de venir en appui par leur sommet (33, 3a) sur le fond de deux logements prévus dans la platine (3) lorsque le support (1) est en position de verrouillage.

8. Dispositif selon la revendication 7, caractérisé en ce que les sommets (33, 33a) des boucles (24, 24a) prévus sur les deux branches sont en appui contre des faces inclinées de bossages (32, 32a) prévus sur la face arrière de la platine (3), assurant ainsi un verrouillage par coincement du support (1).

9. Dispositif selon la revendication 7, caractérisé en ce que, dans sa partie rectiligne centrale (22), l'organe de verrouillage (21) en fil d'acier présente une boucle (31) pour l'actionnement dudit organe, ladite boucle (31) étant engagée dans un logement (30) d'un bossage (29) prévu sur la face arrière du support de miroir.

**Claims**

1. Device for fixing and locking a support (1) of rearview mirror (2) on an adjustable plate (3) actuated by a mechanism to which it is connected and which is housed in a casing for vehicle rearview mirror, characterized in that the support (1) of the mirror (2) has an opening (7) into which the plate (3) is inserted and held therein by at least one of its edges, whereas said support (1) is locked on one of the other edges of said plate (3) by means of a locking member (10, 21).

2. Fixing device according to claim 1, characterized in that the locking member (10, 21) is mounted for axial sliding on the support (1) of the mirror (2) and is adapted to come in abutment against at least one edge of the plate (3) in locking position.

3. Device according to claim 2, characterized in that the mirror support (1) is fitted on the periphery of the plate (3) by a rebate joint (4), and said support is provided, on one of its edges with a hook (6, 6a) in which is engaged an edge of the plate (3) opposite the edge carrying the retaining members (17, 17a, 18, 18a, 32, 32a) cooperating with the locking member (10, 21) sliding in the mirror support (1).

4. Device according to any one of claims 2 and 3, characterized in that the locking member is constituted by a small bar (10) mounted for axial slinding in at least two guiding members (9, 9a) integral with the mirror support (1), said small bar (10) being adapted to come in abutment in locking position against a first pair of tabs (18, 18a) integral with the plate (3), on the one hand by its inner face and on the other hand by two cams (12, 12a) acting perpendicularly to the longitudinal axis of the small bar (10), said small bar (10) having two openings (20, 20a) situated outside the cams (12, 12a) for the passage of the first pair of tabs (18, 18a) and the release of the mirror support (1), said plate (3) being provided with a second pair of tabs (17, 17a) in abutment against the external face of the small bar (10).

5. Device according to claim 4, characterized in that the tabs (18, 18a) of the first pair each comprise a hole into which is engaged a stud (19) integral with the mirror support (1).

6. Device according to claim 4, characterized in that the small bar (10) in plastic material comprises a boss (14) provided with an oblong hole (15) into which is engaged a stud (16) positioning the small bar (10) integral with the mirror support (1).

7. Device according to claim 2, characterized in that the locking member is constituted by an element in elastic steel wire (21) having a rectilinear part (22) and two branches symmetrically folded towards the direction of the rectilinear part (22), said rectilinear part (22) of the locking member being mounted for axial sliding in guiding members (23, 23a) integral with the mirror support (1), said branches comprising two deformable loops (24, 24a) guided at their ends in grooves (25, 25a, 26) provided on the rear face of the mirror support (1), and adapted to abut by their upper parts (33, 33a) against the bottom of two housings provided in the plate (3) when the support (1) is in locking position.

8. Device according to claim 7, characterized in that the upper parts (33, 33a) of the loops (24, 24a) provided on the two branches rest against inclined faces of the bosses (32, 32a) provided on the rear face of the plate (3), thus ensuring a locking by wedging of the support (1).

9. Device according to claim 7, characterized in that, in its central rectilinear part (22), the locking means (21) in steel wire has a loop (31) actuating said member, said loop (31) being engaged in a housing (30) of a boss (29) provided on the rear face of the mirror support.

**Patentansprüche**

1. Anordnung zur Befestigung und Verriegelung eines Halters (1) eines Spiegels (2) an einer ausrichtbaren Platine (3), die von einem Mechanismus betätigt wird, mit dem sie verbunden ist und der in einem Gehäuse eines Rückspiegels für Fahrzeug angeordnet ist, dadurch gekennzeichnet, daß der Halter (1) des Spiegels (2) eine Öffnung (7) aufweist, in die die Platine (3) eingefügt und dort durch mindestens einen ihrer Ränder gehalten ist, während der Halter (1) an einem der anderen Ränder der Platine (3) mittels eines Verriegelungsorgans (10, 21) verriegelt ist.

2. Befestigungsanordnung nach Anspruch 1, dadurch gekennzeichnet, daß das Verriegelungsorgan (10, 21) auf dem Halter (1) des Spiegels (2) axial gleitend montiert und geeignet ist, in der Verriegelungsstellung in Anlage gegen wenigstens einen Rand der Platine (3) zu kommen.

3. Anordnung nach Anspruch 2, dadurch gekennzeichnet, daß der Spiegelhalter (1) am Umfang der Platine (3) von einer Falzanordnung (4) eingefaßt ist und der Halter an einem seiner Ränder wenigstens einen Haken (6, 6a) aufweist, in den ein Rand der Platine (3) eingreift, der dem Rand gegenüberliegt, der die Halteorgane (17, 17a, 18, 18a, 32, 32a) trägt die mit dem im Spiegelhalter (1) gleitenden Verriegelungsorgan (10, 21) zusammenwirken.

4. Anordnung nach irgendeinem der Ansprüche 2 und 3, dadurch gekennzeichnet, daß das Verriegelungsorgan aus einem Stab (10) besteht, der axial gleitend in wenigstens zwei mit dem Spiegelhalter (1) einstückigen Führungsorganen (9, 9a) montiert ist, welcher Stab (10) geeignet ist, in der Verriegelungsstellung in Anlage gegen ein erstes Paar von mit der Platine (3) einstückigen Laschen (18, 18a) einerseits mit seiner Unterseite und andererseits mit zwei senkrecht zur Längsachse des Stabes (10) wirkenden Nocken (12, 12a) zu kommen, welcher Stab (10) zwei außerhalb der Nocken (12, 12a) befindliche Öffnungen für den Durchtritt des ersten Paares von Laschen (18, 18a) und das Lösen des Spiegelhalters (1) aufweist, wobei die Platine (3) mit einem zweiten Paar von Laschen (17, 17a) in Anlage gegen die Außenfläche des Stabes (10) ausgerüstet ist.

5. Anordnung nach Anspruch 4, dadurch gekennzeichnet, daß die Laschen (18, 18a) des ersten Paares je ein Loch aufweisen, in das ein mit dem Spiegelhalter (1) einstückiger Zapfen (19) eingreift.

6. Anordnung nach Anspruch 4, dadurch gekennzeichnet, daß der Stab (10) aus plastischem Material einen Vorsprung (14) aufweist, der mit einem länglichen Loch (15) versehen ist, in das ein mit dem Spiegelhalter (1) einstückiger Zapfen (16) zum Positionieren des Stabes (10) eingreift.

7. Anordnung nach Anspruch 2, dadurch gekennzeichnet, daß das Verriegelungsorgan aus einem elastischen Stahldrahtelement (21) besteht, das einen geradlinigen Teil (22) und zwei in Richtung des geradlinigen Teils (22) symmetrisch umgebogene Zweige aufweist, wobei der geradlinige Teil (22) des Verriegelungsorgans in den mit dem Spiegelhalter (1) einstückigen Führungsorganen axial gleitend montiert sind und die Zweige zwei verformbare Bögen (24, 24a) aufweisen, die an ihren Enden in Nuten (25, 25a, 26) geführt sind, die an der Hinterseite des Spiegelhalters (1) ausgebildet sind, und geeignet sind, mit ihrem Gipfel (33, 33a) in Anlage am Boden von zwei in der Platine (3) vorgesehenen Ausnehmungen zu kommen, wenn der Halter (1) in Verriegelungsstellung ist.

8. Anordnung nach Anspruch 7, dadurch gekennzeichnet, daß die Gipfel (33, 33a) der an den beiden Zweigen vorgesehenen Bögen (24, 24a) in Anlage gegen geneigte Flächen von Vorsprüngen (32, 32a) sind, die an der Hinterseite der Platine (3) vorgesehen sind, wodurch eine Verriegelung durch Klemmen des Halters (1) gesichert wird.

9. Anordnung nach Anspruch 7, dadurch gekennzeichnet, daß das Verriegelungsorgan (21) aus Stahldraht in seinem geradlinigen mittleren Teil (22) eine Wölbung (31) zur Betätigung dieses Organs aufweist, welche Wölbung (31) in eine Ausnehmung (30) eines Vorsprungs (29) eingreift, der an der Hinterseite des Spiegelhalters vorgesehen ist.

Fig. 2

Fig. 1

0 115 448

Fig.3

Fig.4

Fig.5

Fig.6

0 115 448

Fig.7

Fig.8

Fig.9

Fig.10